(19) Europäisches Patentamt
European Patent Office
Office européen des brevets

(11) Veröffentlichungsnummer: **0 141 325**
**A2**

(12) **EUROPÄISCHE PATENTANMELDUNG**

(21) Anmeldenummer: **84112370.6**

(22) Anmeldetag: **13.10.84**

(51) Int. Cl.[4]: **C 09 B 57/04**
C 09 B 17/00, C 09 D 5/00
C 09 B 67/48

(30) Priorität: **25.10.83 DE 3338622**

(43) Veröffentlichungstag der Anmeldung:
**15.05.85 Patentblatt 85/20**

(84) Benannte Vertragsstaaten:
**CH DE FR LI**

(71) Anmelder: **BAYER AG**
**Konzernverwaltung RP Patentabteilung**
**D-5090 Leverkusen 1 Bayerwerk(DE)**

(72) Erfinder: **Neeff, Rütger, Dr.**
**Berta-von-Suttner-Strasse 22**
**D-5090 Leverkusen(DE)**

(72) Erfinder: **Rolf, Meinhard, Dr.**
**Berta-von-Suttner-Strasse 24**
**D-5090 Leverkusen(DE)**

(72) Erfinder: **Müller, Walter**
**Pfarrer-Klein-Strasse 3**
**D-5090 Leverkusen 3(DE)**

(54) **Rotes Azinpigment.**

(57) Rotes Pigment der Formel

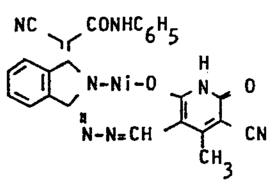

Verfahren zu seiner Herstellung sowie seine Verwendung.

EP 0 141 325 A2

BAYER AKTIENGESELLSCHAFT
Konzernverwaltung RP
Patentabteilung

5090 Leverkusen, Bayerwerk

PG/Ke-c

## Rotes Azinpigment

Die Erfindung betrifft ein neues Rotpigment, das in einer seiner möglichen tautomeren Formen der Formel (I) entspricht, Verfahren zu seiner Herstellung sowie seine

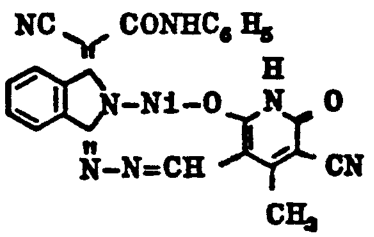

(I)

Verwendung.
Das neue Pigment ist weiterhin gekennzeichnet durch die Netzebenenabstände d/Å 13,46; 12,75; 3,37 und 19,99 mit den relativen Intensitäten 100, 90, 90 und 50.

Die angegebenen Netzebenenabstände werden aus den vier stärksten Linien in dem als Fig. 1 beigegebenen DEBYE-SCHERRER-Diagramm (Wellenlänge 1,54 Å der Cu-K -Strahlung) errechnet.

Das neue Pigment kann vorzugsweise durch die Normfarbwerte (DIN 5033) X = 23,35, Y = 14,19 und Z = 5,08 und einen Bunttonwinkel von 31,3° gekennzeichnet werden. Es besitzt einen roten Farbton, der in etwa der Indicator Number 8 gemäß Colour Index Hue Indication Chart entspricht.

Zur Herstellung des Rotpigmentes der Formel (I) stehen mehrere Verfahren zur Verfügung:

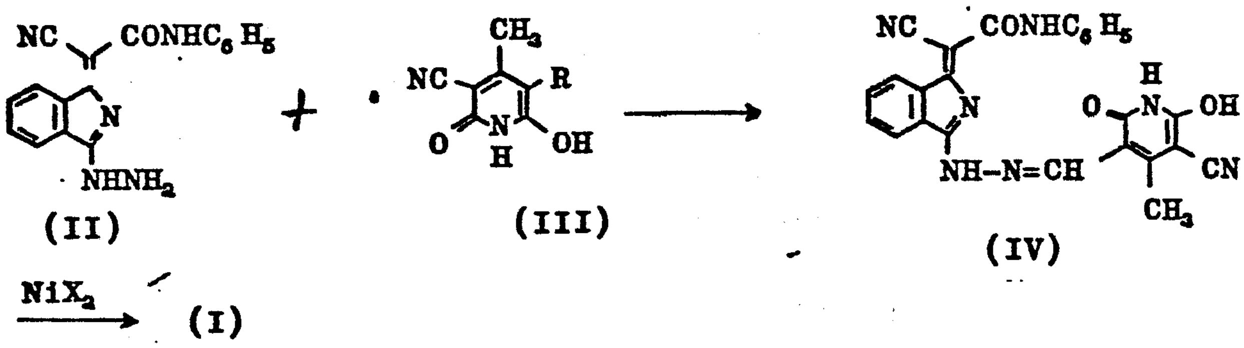

(II) (III) (IV) (I)

Das Hydrazon (II) wird mit dem Aldehyd bzw. einem gegebenenfalls substituierten Aldehydanil des 2.6-Dihydroxy-4-methyl-3-cyanpyridins (III, R = CHO oder CHNAr, wobei Ar einen gegebenenfalls substituierten Phenylrest bezeichnet) zum Azin (IV) kondensiert und anschließend mit einem Nickelsalz zum Rotpigment (I) umgesetzt. Die Reaktion von (II) mit (III) wird zweckmäßig in einem organischen Lösungsmittel bei Temperaturen zwischen 60 und 150°C gegebenenfalls unter Druck durchgeführt. Als organische Lösungsmittel kommen Alkohole wie Methanol, Ethanol, n-Butanol, Ethylenglykol, Ethylenglykolmonomethylether, Ethylenglykolmonoethylether oder Benzylalkohol; Aromaten wie Toluol, Xylol, Chlorbenzol, 1.2-Dichlorbenzol,

Nitrobenzol oder Pyridin oder aprotische Lösungsmittel wie Dimethylformamid, N-Methylpyrrolidon, Dimethylacetamid, Dimethylsulfoxid oder Tetramethylensulfon in Betracht.

Als Substituenten im Anilinteil des Aldehydanils (III) kommen Halogen wie Chlor und Brom, Alkyl, insbesondere $C_1$-$C_4$-Alkyl, bevorzugt Methyl, Alkoxy, insbesondere $C_1$-$C_4$-Alkoxy, bevorzugt Methoxy und Nitro in Frage. Bevorzugt ist der Anilinteil des Aldehydanils unsubstituiert; er kann z.B. auch 1 oder 2 Substituenten tragen. Für die anschließende Metallisierung kann (IV) isoliert und zweckmäßig in einem der obengenannten Lösungsmittel aus der Gruppe der Alkohole oder der aprotischen Lösungsmittel mit einem Nickelsalz bei Temperaturen von 60 - 150°C umgesetzt werden. Als Nickelsalze können das Acetat, Formiat, Carbonat, Sulfat, Chlorid oder Nitrat eingesetzt werden.

In Abwandlung dieses Verfahrens kann auf die Isolierung von (IV) verzichtet und die Metallisierung unmittelbar angeschlossen werden.

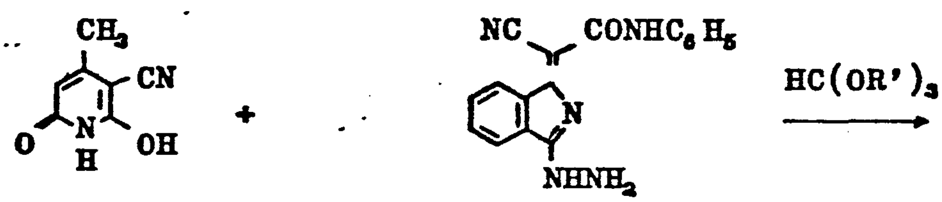


(IV)

(V) (II)

Weiterhin besteht die Möglichkeit, 2.6-Dihydroxy-4-methyl-3-cyanpyridin (V) mit (II) und einem Orthoameisensäureester (R' = $CH_3$, $C_2H_5$) zum Azin (IV) zu kondensieren. Dabei arbeitet man in einem der obengenannten Lösungsmittel bei Temperaturen zwischen 60 und 150°C, zweckmäßig unter azeotroper Entfernung des sich bildenden Alkohols R'OH. Auch bei dieser Verfahrensvariante kann (IV) isoliert und wie oben geschildert metallisiert werden, oder man schließt die Metallisierung im selben Lösungsmittel direkt an.

Schließlich kann man die Herstellung des Aldehydanils (III, R = CHNAr) in die Synthese einbeziehen und in einem vorgelagerten Schritt das Pyridon (V) und gegebenenfalls substitiertes Anilin mit einem Orthoameisensäureester ($HC(OR')_3$; R' = $CH_3$, $C_2H_5$) kondensieren. Anschließend wird das Hydrazon (II) zugesetzt und wie oben geschildert zum Rotpigment umgesetzt. Die Reaktion des Pyridons kann in einem der obengenannten Lösungsmittel ebenfalls bei Temperaturen von 60 - 150°C erfolgen.

Das Rotpigment (I) fällt nach den oben geschilderten Verfahren im allgemeinen in ausreichender Reinheit an und kann direkt oder nach geeigneter Formierung als Pigment eingesetzt werden. Es besteht jedoch die Möglichkeit, durch Nachbehandlung in einem Lösungsmittel, gegebenenfalls bei erhöhten Temperaturen, eine Nachreinigung durchzuführen.

Es ist aber zu beachten, daß das Pigment (I) nicht auf Temperaturen oberhalb 160 - 170°C erhitzt wird, da es dann in einer orangefarbenen Modifikation anfällt.

Diese orangefarbene Modifikation ist aus EP-A1-74924 bekannt.

Ein neues Verfahren zur Herstellung eines orangefarbenen Pigments der Formel (I) besteht somit darin, daß man das rote Pigment der Formel (I), gegebenenfalls in einem Verdünnungsmittel wie Dimethylformamid, Nitrobenzol, Dichlorbenzol auf Temperaturen oberhalb 160°C, gegebenenfalls unter Druck, 15 Minuten bis 5 Stunden lang, erhitzt.

Das Pigment der Formel (I) eignet sich aufgrund seiner guten Pigmenteigenschaften für die verschiedensten Pigmentapplikationen. So kann es zur Herstellung von sehr echt pigmentierten Systemen, wie Mischung mit anderen Stoffen, Zubereitungen, Anstrichmitteln, Druckfarben, gefärbtem Papier und gefärbten makromolekularen Stoffen verwendet werden. Unter Mischung mit anderen Stoffen können z.B. solche mit anorganischem Weißpigmenten wie Titandioxid (Rutil) verstanden werden. Zubereitungen sind z.B. Fluspasten mit organischen Flüssigkeiten und gegebenenfalls Konservierungsmitteln. Die Bezeichnung Anstrichmittel steht z.B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für den Papier-, Textil- und Blechdruck zu verstehen. Insbesondere eignet sich das neue rote Pigment zum Pigmentieren von makromolekularen organischen Stoffen.

Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine, z.B. Polyethylen oder Polyamide, Superpolyamide, Polymerisate und Mischpolymerisate aus Acrylestern oder Methacrylestern, Acrylnitril, Acrylamid, Butadien, Styrol sowie Polyurethane und Polycarbonate. Die mit dem beanspruchten Produkt pigmentierten Stoffe können in beliebiger Form vorliegen. Wegen seiner hohen Transparenz und Wetterechtheit eignet sich das Pigment der Formel (I) besonders zum Einsatz in Automobillacken, insbesondere für Metalliclackierungen.

Das Pigment der Formel (I) ist ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig, in plastischen Massen gut verteilbar und insbesondere ausgezeichnet lichtecht und migrationsecht.

Beispiel 1

26,16 g 1-(Cyano-phenylcarbamoyl-methylen)-3-hydrazono-isoindolenin und 21,76 g 2.6-Dihydroxy-4-methyl-5-cyano-pyridin-3-aldehydanil werden in 280 ml Dimethylformamid 1 Stunde bei 100°C gerührt und dann mit 22,56 g Nickelacetat . $4H_2O$ in 15 Minuten versetzt. Man rührt dann 3 Stunden bei 120°C, saugt das in schönen roten Nadeln kristallisierte Produkt bei 80°C ab, wäscht mit Methanol und erhält nach dem Trocknen 41,2 g = 91,8 % d. Th. des scharlachroten Pigmentes der Formel (I).

$C_{25}H_{15}N_7O_3Ni$ (519,7)

| | | | | | |
|---|---|---|---|---|---|
| Ber. | C 57,73 | H 2,89 | N 18,86 | O9,24 | Ni 11,29 |
| Gef. | C 59,90 | H 3,25 | N 18,70 | O9,40 | Ni 11,30 |

Das Röntgenbeugungsdiagramm nach DEBYE-SCHERRER ist gekennzeichnet durch die Netzebenenabstände d Å 13,46, 12,75, 3,37 und 19,99 (Intensitäten 100, 90, 90 und 50). Das vollständige Spektrum ist in Fig. 1 abgebildet.

Beispiel 2

6,54 g 1-(Cyano-phenylcarbamoyl-methylen)-3-hydrazono-isoindolenin und 3,84 g 2.6-Dihydroxy-4-methyl-5-cyano-pyridin-3-aldehyd werden in 70 ml Dimethylformamid 1 Stunde bei 100°C gerührt und dann mit 5,64 g Nickelacetat . $4H_2O$ versetzt. Man rührt noch 3 Stunden bei 120°C, saugt das in schönen roten Nadeln kristallisierte Produkt bei 80°C ab, wäscht mit Methanol und erhält nach dem Trocknen 9,8 g = 87,3 % d. Th. des scharlachroten Pigmentes der Formel (I).

Beispiel 3

3,25 g 2.6-Dihydroxy-4-methyl-5-cyan-pyridin, 2,6 g Orthoameisensäuretrimethylester und 2,52 g Anilin werden in 75 ml Dimethylformamid 1 Stunde bei 120 - 125°C gerührt und bei 100°C mit 6,54 g 1-(Cyano-phenylcarbamoyl-methylen)-3-hydrazono-isoindolenin versetzt. Man rührt noch 1 Stunde bei 100°C, trägt 5,64 g Nickelacetat . $4H_2O$ ein, erwärmt 3 Stunden auf 120°C, saugt das in schönen roten Nadeln kristallisierte Produkt bei 80°C ab, wäscht mit Methanol und erhält nach dem Trocknen 9,2 g = 81,7 % d. Th. des scharlachroten Pigmentes der Formel (I).

Beispiel 4

5 g 1-(Cyano-phenylcarbamoyl-methylen)-3-hydrazono-isoindolenin, 2,1 g Orthoameisensäuretrimethylester, 2,5 g 2.6-Dihydroxy-4-methyl-5-cyano-pyridin werden in 50 ml Dimethylformamid in 1 Stunde auf 120 - 125°C erwärmt und 3 Stunden bei 120 - 125°C gerührt. Man versetzt dann mit 2,82 g Nickelacetat . $4H_2O$, rührt 3 Stunden bei 120°C, saugt das in schönen roten Nadeln kristallisierte Produkt bei 80°C ab, wäscht mit Methanol und erhält nach dem Trocknen 7,1 g = 82,8 % d. Th. des scharlachroten Pigmentes der Formel (I).

Beispiel 5

5 g 1-(Cyano-phenylcarbamoyl-methylen)-3-hydrazono-isoindolenin, 2,1 g Orthoameisensäuretrimethylester

und 2,5 g 2.6-Dihydroxy-4-methyl-5-cyan-pyridin werden in 50 ml Nitrobenzol in 1 Stunde auf 140 - 145°C erwärmt und 4 Stunden bei 140 - 145°C gerührt. Man saugt das in gelbbraunen Nädelchen kristallisierte Produkt bei 80°C ab, wäscht mit Methanol und erhält nach dem Trocknen 7 g = 91,6 % d. Th. des Azins der Formel

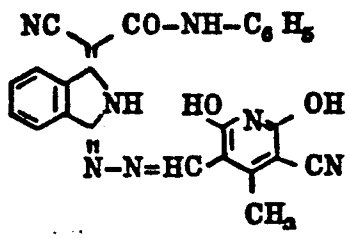

5 g des obengenannten Azins werden mit 2,82 g Nickelacetat . $4H_2O$ in 50 ml Dimethylformamid in 1 Stunde auf 120°C erwärmt und 3 Stunden bei dieser Temperatur gerührt. Man saugt das in schönen roten Nadeln kristallisierte Produkt bei 80°C ab, wäscht mit Methanol und erhält nach dem Trocknen 5,2 g = 92,7 % d. Th. des scharlachroten Pigmentes der Formel (I).

Beispiel 6 ( Anwendungsbeispiel)

4 g feingemahlenes Pigment gemäß Beispiel 1 werden in 92 g eines Einbrennlackes folgender Zusammensetzung dispergiert:

33 % Alkydharz
15 % Melaminharz
5 % Glykolmonomethylether
34 % Xylol
13 % Butanol

Als Alkydharze kommen Produkte auf Basis synthetischer und pflanzlicher Fettsäuren wie Kokosöl, Rizinusöl, Rizinenöl, Leinöl u.a. in Frage. Anstelle von Melaminharzen können Harnstoffharze verwendet werden.

Nach erfolgter Dispergierung wird der pigmentierte Lack auf Papier-, Glas-, Kunststoff- oder Metall-Folien aufgetragen und 30 Minuten bei 130°C eingebrannt. Die Lakkierungen besitzen sehr gute Licht- und Wetterbeständigkeit sowie gute Überlackierechtheit.

Ein Einbrennlack, hergestellt gemäß Beispiel 6, wird auf weißes Papier aufgestrichen und bei 130°C eingebrannt. Die farbmetrische Auswertung gemäß DIN 5033 ergibt die Normfarbwerte X = 23,35, Y = 14,19, Z = 5,08 und einen Bunttonwinkel von 31,3°.

Beispiel 7 (Anwendungsbeispiel)

6 Teile Pigment nach Beispiel 1 werden in 12 Teilen Xylol, 4,1 Teilen Butylacetat und 0,7 Teilen n-Butanol mit 22,5 Teilen einer 20 %igen Lösung von Celluloseacetobutyrat in Butylacetat/Xylol (2 : 1) 30 Minuten im Red Devil mit 2 - 3 mm Glaskugeln dispergiert. Nach Auffetten durch Zusatz von 10 Teilen eines gesättigten Polyesterharzes (Dynapol H 700), 7,3 Teilen Melaminharz, 8,7 Teilen einer 20 %igen Lösung von Celluloseacetobutyrat in Butylacetat/Xylol (2 : 1), 18 Teilen Butylacetat, 1,6 Teilen n-Butanol und 9,7 Teilen Xylol wird nochmals 5 Minuten dispergiert.

Zu diesem Lack setzt man eine Dispersion von Aluminium-Paste (60 %) in einem organischen Lösungsmittel (ca. 1 : 2) in der Menge zu, daß das Verhältnis Pigment : Al zwischen 80 : 20 und 1 : 99 zu liegen kommt.

Dieser Lack wird aufgestrichen und nach dem Trocknen mit einem Klarlack auf Basis Acrylat/Melaminharz, der weitere Hilfsmittel wie z.B. UV-Absorber enthalten kann, überzogen und eingebrannt.

Man erhält eine rote Metalliclackierung mit brillantem Farbton und ausgezeichneter Wetterechtheit.

Patentansprüche

1. Rotes Pigment, das in einer seiner tautomeren Formen der Formel

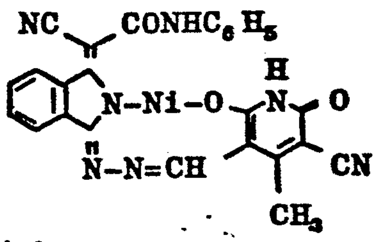

(I)

entspricht.

2. Rotes Pigment gemäß Anspruch 1, gekennzeichnet durch die Netzebenenabstände d/Å 13,46; 12,75; 3,37 und 19,99 mit den relativen Intensitäten 100, 90, 90 und 50.

3. Pigment gemäß Anspruch 1, gekennzeichnet durch die Normfarbwerte (nach DIN 5033) X = 23,35, Y = 14,19 und Z = 5,08 sowie einen Bunttonwinkel von 31,3°.

4. Verfahren zur Herstellung des Pigments gemäß Anspruch 1, dadurch gekennzeichnet, daß man das Hydrazon der Formel (II) mit dem Aldehyd oder Aldehydanil der Formel (III), wobei R -CHO oder -CHNAr bezeichnet und Ar für gegebenenfalls substituiertes Phenyl steht, zum Azin (IV) umsetzt

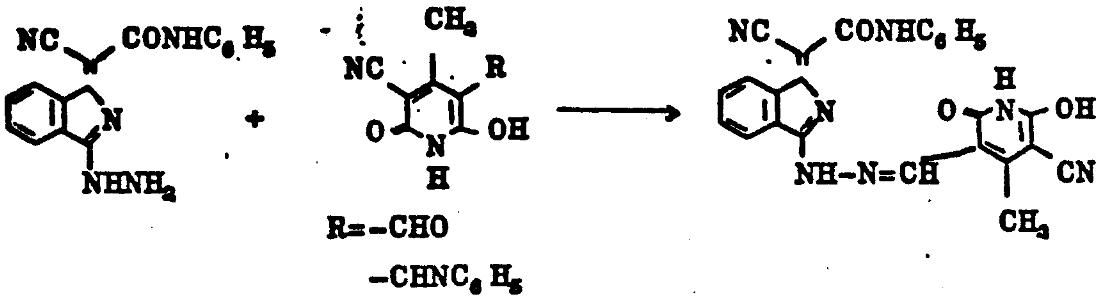


(II) (III) (IV)

und man gleichzeitig oder anschließend mit einem Nickelsalz metallisiert.

5. Verfahren zur Herstellung des Rotpigments gemäß Anspruch 1, dadurch gekennzeichnet, daß man 2.6-Dihydroxy-4-methyl-3-cyanpyridin (V) mit dem Hydrazon

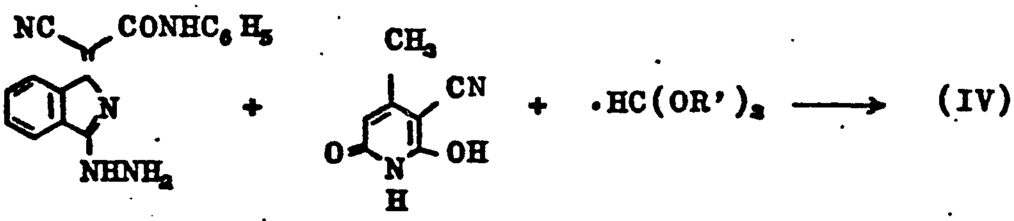


(III) (V) (VI)

(III) und einem Orthoameisensäureester der Formel (VI), wobei R' für Methyl oder Ethyl steht, zum Azin (IV) umsetzt und gleichzeitig oder anschließend mit einem Nickelsalz metallisiert.

6. Verfahren zur Herstellung des Pigments gemäß Anspruch 1, dadurch gekennzeichnet, daß man 2.6-Dihydroxy-4-methyl-3-cyanpyridin (V) mit einem gegebenenfalls substituierten Anilin (VII) und einem Orthoameisensäureester (VI), wobei R'

Methyl oder Ethyl bezeichnet, zu einem Anil der Formel (VIII) kondensiert

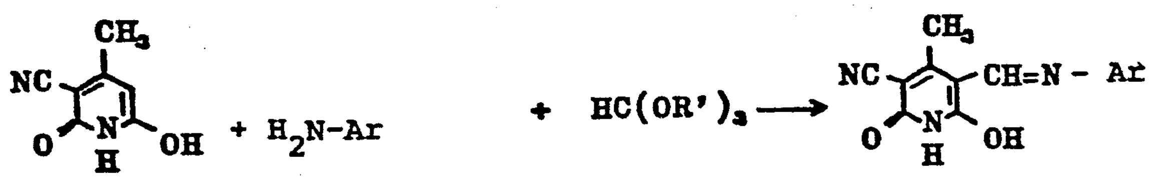


(V) (VII) (VI) (VIII)

und man das Aldehydanil ohne Isolierung mit einer Verbindung der Formel (II)

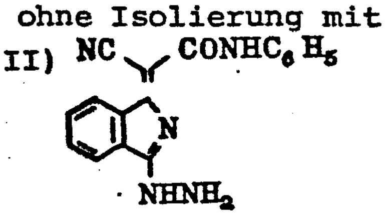

(II)

zum Azin (IV)

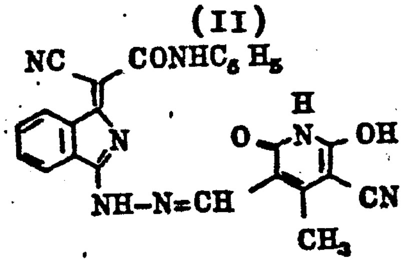

(IV)

umsetzt und man während oder nach der Umsetzung der Verbindungen (II) und (VIII) mit einem Nickelsalz metallisiert.

7. Verfahren zur Herstellung eines orangefarbenen Pigments der Formel

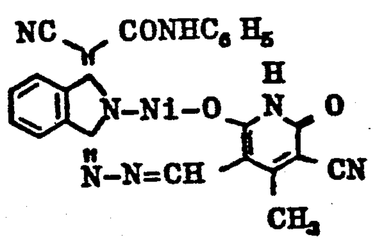

(I)

dadurch gekennzeichnet, daß man das rote Pigment der Formel (I) auf Temperaturen oberhalb 160°C erhitzt.

8. Verfahren zum Pigmentieren von Automobillacken, dadurch gekennzeichnet, daß man das Pigment gemäß Anspruch 1 verwendet.

9. Verfahren gemäß Anspruch 8 zum Pigmentieren von Metalliclacken.

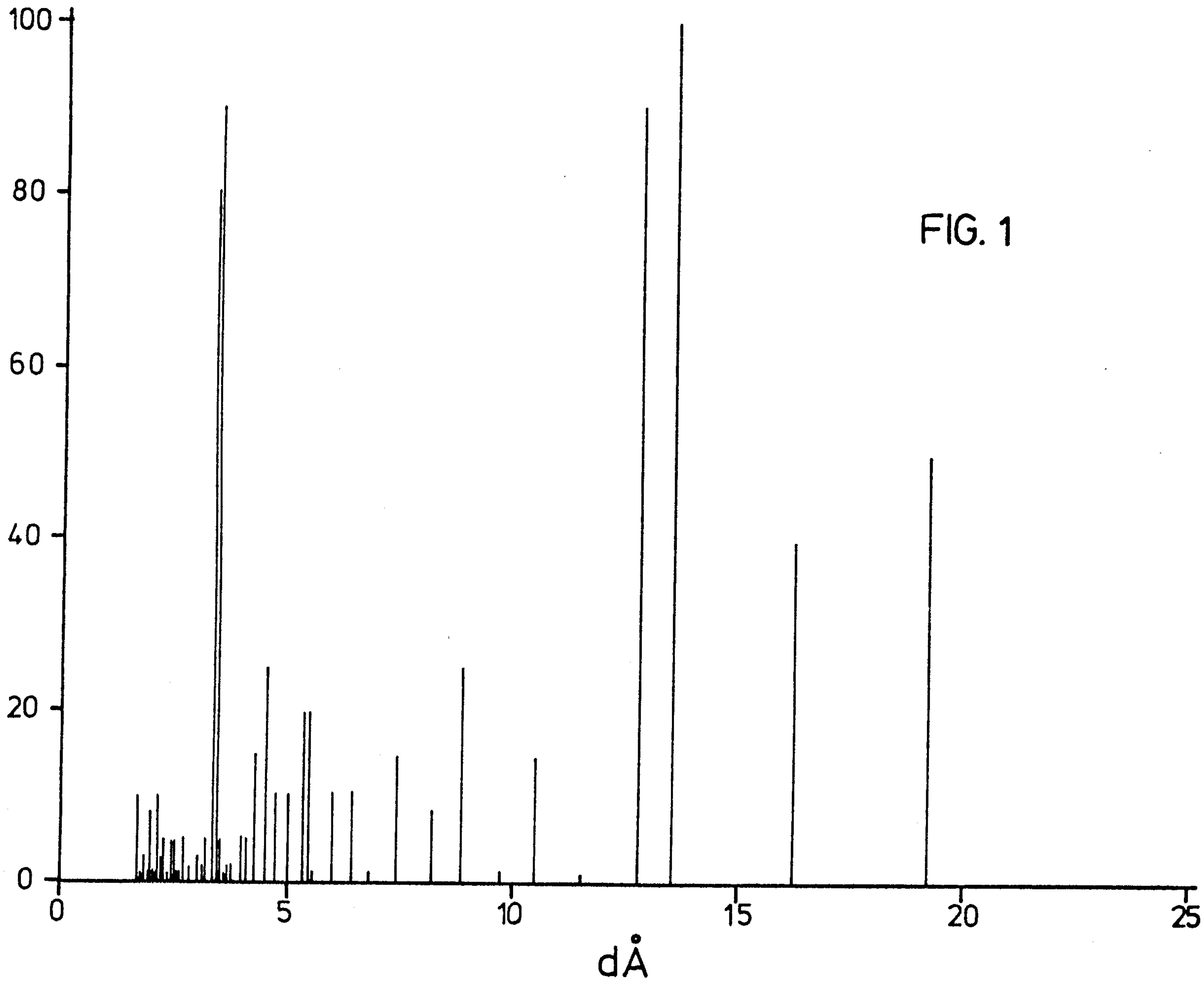


FIG. 1